# EUROPÄISCHE PATENTSCHRIFT

(11) **EP 0 832 775 B1**
(45) Veröffentlichungstag und Bekanntmachung des Hinweises auf die Patenterteilung: **16.08.2001**
(21) Anmeldenummer: 97116027.0
(22) Anmeldetag: 15.09.1997
(51) Int. Cl.: B60J 7/057, G01D 5/16

(54) **Stellantrieb zur Bewegung eines fremdkraftbetätigten Kraftfahrzeug-Schiebedaches**
Positioning device for remotely power actioning a sliding roof for vehicle
Dispositif de positionnement à distance d'un toit coulissant pour véhicule

(30) Priorität: 27.09.1996 DE 19639940
(43) Veröffentlichungstag der Anmeldung: 01.04.1998
(73) Patentinhaber: SIEMENS AKTIENGESELLSCHAFT, 80333 München (DE)
(72) Erfinder: Hopfmüller, Gebhard, Dipl.-Ing., 2544 Siebenhaus (AT)

(56) Entgegenhaltungen:
- EP-A- 0 093 870
- US-A- 4 395 695
- GANZ,HAHN,WATZLAWICK: "die Elektronik im Schiebedach als Komfortelement" ATZ AUTOMOBILTECHNISCHE ZEITSCHRIFT, Bd. 95, Nr. 11, November 1993, STUTTGART, DE, Seiten 592-596, XP000409589

## Beschreibung

Die Erfindung bezieht sich auf einen Stellantrieb zur Bewegung eines fremdkraftbetätigten Kraftfahrzeug-Schiebedaches gemäß Patentanspruch 1. Stellantriebe, insbesondere Schiebedachantriebe, der vorgenannten Z.B. durch ATZ, Automobiltechnische Zeitschrift 95(1993) No.11 S.592-596 bekannten Art erhalten ihre Stellbefehle von einem Stellelement, insbesondere einem Bedienschalter, der üblicherweise an der Decke des Fahrzeuges derart befestigt ist, daß er vom Innenraum des Fahrzeuges her händisch betätigbar ist; das Stellelement ist durch Steckkontaktierung bzw. einen Leitungsstrang, insbesondere einen Kabelbaum, mit einer im Deckenbereich vorzugsweise oberhalb des Stellelementes abgesetzt angeordneten Steuereinheit verbunden, die in Abhängigkeit von den Vorgaben des Stellelements den eigentlichen motorischen Stellantrieb für das Schiebedach ansteuert. Die bekannte Verbindung zwischen dem Stellelement einerseits und der Steuerelektronik andererseits mittels einer direkten Steckverbindung bzw. mittels eines Kabelbaumes erfordert die Einhaltung enger Montagetoleranzen zwischen der Steuerelektronik und dem Steuerelement bzw. erfordert einen höheren Fertigungs- und Montageaufwand.

Das den nächstliegenden Stand der Technik bildende, oben genannte Dokument, beinhaltet einen Stellantrieb zur Bewegung eines fremdkraftbetätigten Kraftfahrzeug-Schiebedaches
- mit einer Steuereinheit (7), insbesondere einer Elektronik-Box, für das Kraftfahrzeug-Schiebedach unterhalb eines Kraftfahrzeugdaches, insbesondere dessen Dachstreben (9) und oberhalb einer Dachinnenhimmel-Abdeckung (10);
- mit einem Stellelement (1;2 bzw.4;5), insbesondere einem Bedienschalter, mit einer Bedienung unterhalb der Dachinnenhimmel-Abdeckung (10);

Eine demgegenüber aufwandsärmere und insbesondere hinsichtlich der Einhaltung von Einbautoleranzen unempfindlicherer Zusammenbau eines Kraftfahrzeug-Schiebedachantriebes ist erfindungsgemäß durch einen Stellantrieb gemäß Anspruch 1 möglich. In vorteilhafter Weise ist zur berührungslosen Stellbefehlübertragung insbesondere ein magnetoresistiver (MR) Schalter mit einem vorzugsweise winkelverstellbaren Stabmagneten als Geberteil des Stellelementes und ein magnetoresistiver Empfänger, vorzugsweise von in Brückenschaltung angeordneten magnetoresistiven Einzel-Sensoren, als integriertes Bauteil der Steuereinheit vorgesehen. Weitere vorteilhafte Ausgestaltungen der Erfindung sind jeweils Gegenstand der Unteransprüche.

Es hat sich gezeigt, daß beim Einsatz eines MR-Schalters im erfindungsgemäßen Sinne in vorteilhafter Weise noch transversale bzw. longitudinale Verschiebungungen von ca. 2 mm sowie Winkelabweichungen zwischen der Flächenachse der magnetoresistiven Sensoren einerseits und der Drehachse des Geberteils andererseits von ca. 10° ohne unzulässigen Einfluß auf die Stellbefehlübertragung, d.h. mit der erforderlichen Meßgenauigkeit, toleriert werden können.

Vorrichtungen, mit denen u.a. unterschiedliche Winkelpositionen durch Drehung eines Magneten zur Widerstandsänderung in einem magnetoresistiven Sensor detektierbar sind, werden z.B. in der WO 94/17426 bzw. in der darin eingangs zitierten Philips-Druckschrift "Technische Information TI 901228" beschrieben.

Die Erfindung sowie weitere vorteilhafte Ausgestaltungen der Erfindung gemäß Merkmalen der Unteransprüche werden im folgenden anhand schematisch dargestellter Ausführungsbeispiele in der Zeichnung näher erläutert; darin zeigen:
- FIG 1: in einer Seitenansicht eines dachseitigen Ausschnittes einer Fahrzeugkabine eines Kraftfahrzeuges als erstes Ausführungsbeispiel eine Anordnung mit einer berührungslosen magnetischen Stellbefehlübertragung;
- FIG 2: in einer Seitenansicht eines dachseitigen Ausschnittes einer Fahrzeugkabine eines Kraftfahrzeuges als weiteres Ausführungsbeispiel eine Anordnung mit einer berührungslosen optischen Stellbefehlübertragung.

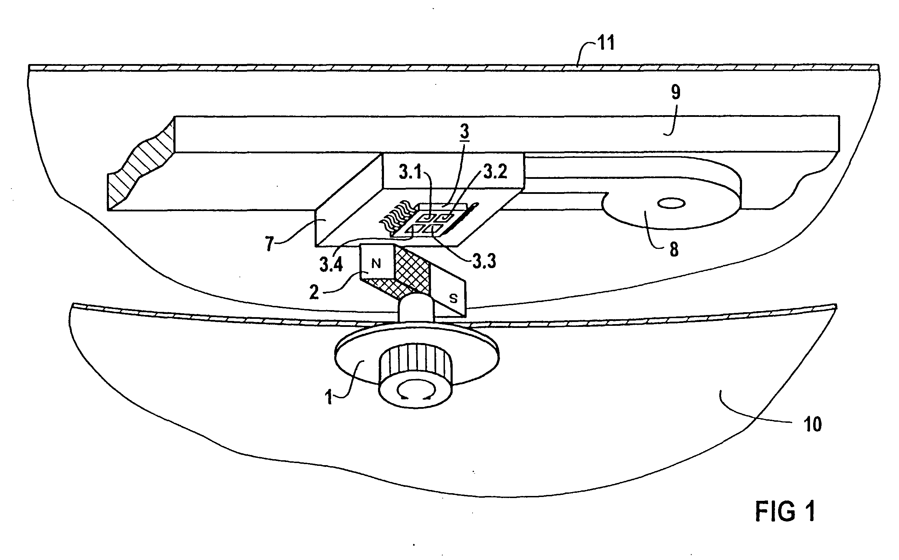

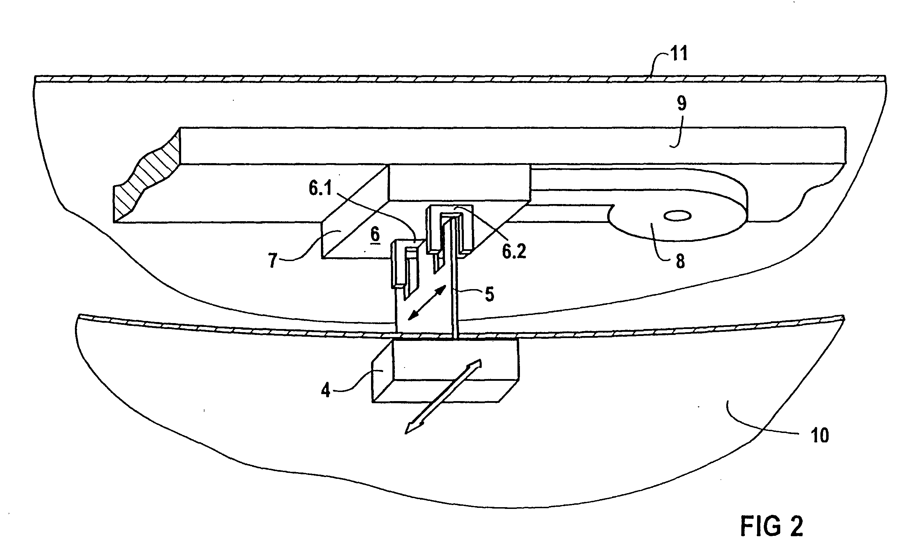

FIG 1, 2 zeigen ausschnittsweise den oberen Teil einer Fahrzeugkabine mit einer an einer Dachstrebe 9 unterhalb eines Fahrzeugdaches 11 gehalterten Motor-Getriebe-Antriebseinheit 8 zur Betätigung eines hier nicht näher dargestellten Schiebedaches.

Die Motor-Getriebe-Antriebseinheit erhält ihre Bewegungsbefehle von einer ebenfalls an der Dachstrebe 9 befestigten Steuereinheit 7, insbesondere in Form einer Elektronik-Box. Die Ansteuerung der Steuereinheit 7 erfolgt von einem im Bereich einer Dachinnenhimmel-/Lampen-Abdeckung 10 in Abstand zu der Steuereinheit 7 angeordneten Stellelement 1;2 bzw.4;5 mittels einer berührungslosen Stellbefehlübertragung.

Gemäß einem ersten, anhand von FIG 1 erläuterten, vorteilhaften Ausführungsbeispiel ist zur berührungslosen Stellbefehlübertragung ein "magnetischer Schalter" in Form eines sogenannten MR (Magneto Resistance)- bzw. GMR (Giant Magneto Resistance)-Schalters vorgesehen; solche Schalter nutzen den sogenannten magnetoresistiven Effekt aus, der darin besteht, daß der elektrische Widerstand einer dünnen ferromagnetischen Schicht (Permalloy) vom Winkel zwischen der Richtung des in der Schicht fließenden Stromes und der Magnetisierung abhängt, die durch die Einwirkung eines äußeren, entsprechend verstellbaren Magneten bzw. dessen Magnetfeldes veränderbar ist.

In dem praktischen Ausführungsbeispiel gemäß FIG 1 ist ein mittels eines Bedienteils 1 in Form eines Drehstellers winkelverstellbarer, insbesondere stabförmiger, Dauermagnet N;S als Magnetfeld-Geber 2 vorgesehen, durch dessen Feld- bzw. Feldrichtungsänderung bei einer Winkelverstellung in der in bekannter Weise in Brückenschaltung zu einem Magnetfeld-Empfänger 3 verbundenen magnetoresistiven Einzel-Sensoren 3.1-3.4 entsprechende Widerstandsänderungen hervorgerufen werden, die als zu den Winkelstellungen äquivalente Stellsignale detektierbar sind; gemäß der Zahl von unterschiedlichen Winkelstellungen sind neben einer Ruhestellung entsprechende unterschiedliche aktive Schalterstellungen mit jeweils spezifischen Stellbefehlen einstellbar.

In vorteilhafter Weise ist von dem Stellelement 1;2 der Bedienteil 1 unterhalb und der Magnetfeld-Geber 2 abgesetzt oberhalb der Dachinnenhimmel-Abdeckung 10 angeordnet.

Gemäß einem weiteren, anhand von FIG 2 erläuterten, Ausführungsbeispiel ist zur berührungslosen Stellbefehlübertragung ein "optischer Schalter" mit einer Lichtübertragungsstrecke vorgesehen, deren Durchlässigkeit bzw. Unterbrechung zu codierten, unterschiedlichen Schalterstellungen entsprechenden Lichtsignalkombinationen führt.

In dem praktischen Ausführungsbeispiel gemäß FIG 2 sind eine mittels eines Bedienteils 4 in Form einer Schiebetaste bzw. eines Knebels sowie als Geber 5 eine optische Blende vorgesehen, durch deren entsprechend codierte Blendenteile bzw. Öffnungsteile der jeweilige Lichtstrahl zwischen Senderschenkel und Empfängerschenkel von zwei zu einem optischen Sender-Empfänger 6 zusammengefaßten Gabellichtschranken 6.1 bzw. 6.2 derart unterbrechbar bzw. freigebbar ist, daß sich maximal vier Signalkombinationen entsprechend vier unterschiedlichen Schalterstellungen aktivieren lassen.

In vorteilhafter Weise ist wiederum von dem Stellelement 4;5 der Bedienteil 4 unterhalb und der Geber 5 in Form der die jeweiligen Lichtstrahlen unterbrechenden bzw. freigebenden, zu den Gabellichtschranken 6.1 bzw.6.2 berührungslos verstellbaren Blende geschützt und vor Fremdlichteinfluß abgedeckt oberhalb der Dachinnenhimmel-Abdeckung 10 angeordnet.

## Patentansprüche

1. Stellantrieb zur Bewegung eines fremdkraftbetätigten Kraftfahrzeug-Schiebedaches
- mit einer Steuereinheit (7), insbesondere einer Elektronik-Box, für das Kraftfahrzeug-Schiebedach unterhalb eines Kraftfahrzeugdaches, insbesondere dessen Dachstreben (9) und oberhalb einer Dachinnenhimmel-Abdeckung (10);
- mit einem Stellelement (1;2 bzw.4;5), insbesondere einem Bedienschalter, mit einer Bedienung unterhalb der Dachinnenhimmel-Abdeckung (10);
- mit einer berührungslosen Stellbefehlübertragung zwischen dem Stellelement (1;2 bzw.4;5) einerseits und der Steuereinheit (7) andererseits.

2. Stellantrieb nach Anspruch 1
- mit einem Stellelement enthaltend zumindest ein Bedienteil (1 bzw.4) und einen Geber (2 bzw.5);
- mit einem oberhalb der Dachinnenhimmel-Abdeckung (10) angeordneten Geber (2 bzw.5);
- mit einem unterhalb der Dachinnenhimmel-Abdeckung (10) angeordneten Bedienteil (1 bzw.4).

3. Stellantrieb nach Anspruch 1 und/oder 2
- mit einer Magnetfeld-Stellbefehlübertragung durch Nutzung des sogenannten magnetoresistiven Effektes in einem Magnetfeld-Empfänger (3) als Teil der Steuereinheit (7), einerseits und einem Magnetfeld-Geber (2) als Teil des Stellelementes (1;2) andererseits.

4. Stellantrieb nach Anspruch 3
- mit einem Dauermagneten, insbesondere einem Stabmagneten (N;S), als Magnetfeld-Geber (2) des Stellelementes (1;2).

5. Stellantrieb nach Anspruch 1 und/oder 2
- mit einer Licht-Stellbefehlübertragung durch mittels des Stellelementes (4;5) stellbefehlcodierter Freigabe bzw. Sperrung eines als Teil der Steuereinheit (7) jeweils von einem Lichtsender ausgehenden und vom einem Lichtsensor, insbesondere einer Gabellichtschranke (6.1 bzw.6.2), rückempfangenen Lichtstrahls.

6. Stellantrieb nach Anspruch 5
- mit einer Stellbefehlcodierung durch einen entsprechend lichtdurchlässig bzw. lichtundurchlässig ausgebildeten Geber (5) des Stellelementes (4;5), insbesondere in Form einer in den Lichtstrahl positionierbaren Blende.

## Claims

1. Actuating drive for moving a motor vehicle sliding roof which is operated by external power
- having a control unit (7), in particular an electronics box, for the motor vehicle sliding roof underneath a motor vehicle roof, in particular its roof struts (9) and above a roof inner top cover (10);
- having an actuating element (1; 2 or 4; 5), in particular a control switch, with a control underneath the roof inner top cover (10);
- having contactless actuating command transmission between the actuating element (1; 2 or 4; 5) on the one hand and the control unit (7) on the other hand.

2. Actuating drive according to Claim 1
- having an actuating element containing at least one control part (1 or 4) and one transmitter (2 or 5);
- having a transmitter (2 or 5) arranged above the roof inner top cover (10);
- having a control part (1 or 4) arranged underneath the roof inner top cover (10).

3. Actuating drive according to Claim 1 and/or 2
- having magnetic-field actuating command transmission by using the so-called magnetoresistive effect in a magnetic-field receiver (3) as part of the control unit (7), on the one hand, and a magnetic-field transmitter (2) as part of the actuating element (1; 2), on the other hand.

4. Actuating drive according to Claim 3
- having a permanent magnet, in particular a bar magnet (N; S) as the magnetic-field transmitter (2) of the actuating element (1; 2).

5. Actuating drive according to Claim 1 and/or 2
- having a light actuating command transmission by enabling or inhibiting, coded on the basis of an actuating command by means of the actuating element (4; 5), a light beam which, as part of the control unit (7), in each case originates from a light transmitter and is received back by a light sensor, in particular by a fork-shaped light barrier (6.1 or 6.2).

6. Actuating drive according to Claim 5
- having actuating command coding by means of a transmitter (5) of the actuating element (4; 5), which is designed to be opaque or translucent as appropriate, in particular in the form of a shutter which can be positioned in the light beam.

## Revendications

1. Organe moteur pour le déplacement d'un toit ouvrant de véhicule automobile à commande automatique
- comprenant une unité (7) de commande, notamment une boîte électronique, pour le toit ouvrant de véhicule automobile en-dessous d'un toit de véhicule automobile, notamment de sa poutrelle (9) de toit et au-dessus d'un habillage (10) de plafond ;
- comprenant un élément (1;2 ou 4;5) de commande, notamment un interrupteur de commande, ayant une commande en-dessous de l'habillage (10) de plafond ;
- comprenant une transmission d'instructions de commande sans contact entre l'élément (1;2 et 4;5) de commande, d'une part et l'unité (7) de commande, d'autre part.

2. Organe moteur suivant la revendication 1
- comprenant un élément de commande comportant au moins une partie (1 ou 4) de commande et un générateur (2 ou 5) ;
- comportant un générateur (2 ou 5) disposé au-dessus de l'habillage (10) du plafond ;
- comprenant une partie (1 ou 4) de commande disposée en-dessous de l'habillage (14) de plafond.

3. Organe moteur suivant la revendication 1 et/ou 2
- comprenant une transmission d'instructions de commande par champ magnétique en utilisant ce que l'on appelle l'effet magnéto-résistif dans un récepteur (3) à champ magnétique comme partie de l'unité (7) de commande, d'une part et un générateur (2) de champ magnétique comme partie de l'élément (1;2) de commande, d'autre part.

4. Organe moteur suivant la revendication 3
- comprenant un aimant permanent, notamment un barreau aimanté (N ; S) en tant que générateur (2) de champ magnétique de l'élément (1;2) de commande.

5. Organe moteur suivant la revendication 1 et/ou 2
- comprenant une transmission d'instructions de commande par voie lumineuse en dégageant ou en obturant d'une manière codée par des ordres de commande au moyen de l'élément (4;5) de commande, un faisceau lumineux issu en tant que partie de l'unité (7) de commande, respectivement, d'un émetteur de lumière et reçu par un capteur de lumière, notamment par une cellule (6.1 et 6.2) photoélectrique en fourche.

6. Organe moteur suivant la revendication 5
- comprenant un codage d'ordres de commande par un émetteur (5) de l'élément (4;5) de commande constitué de manière adéquate en étant transparent à la lumière ou opaque à la lumière, notamment sous la forme d'un écran pouvant être placé dans le faisceau lumineux.
